# EUROPEAN PATENT APPLICATION

(11) **EP 4 331 830 A1**
(43) Date of publication of application: **06.03.2024**
(21) Application number: 23194350.7
(22) Date of filing: 30.08.2023
(51) Int. Cl.: B32B 3/30, B32B 5/02, B32B 5/18, B32B 5/24, B32B 5/26, B32B 27/12, B32B 27/30, B32B 27/32, B32B 27/36

(54) **TEXTILE COVER, INSTRUMENT PANEL, MANUFACTURING METHOD, AND AIRBAG DEVICE**

(30) Priority: 30.08.2022 CN 202211057961
(71) Applicant: Faurecia (China) Investment Co., Ltd., 201109 Shanghai Shanghai (CN)
(72) Inventor: ZHAO, Lili, Shanghai, 201109 (CN)
(74) Representative: Prinz & Partner mbB

(57) **Abstract**

This application provides a textile cover, an instrument panel, an airbag device and a manufacturing method for an instrument panel. The textile cover is of a monolayer or multilayer structure, wherein the tensile strength of the textile cover in length and cross direction is less than or equal to 480N, and the tear strength of the textile cover in length and cross direction is less than or equal to 48N.

## Description

### Technical Field

This application relates to a textile cover, an instrument panel, a manufacturing method, and an airbag device.

### Background

An airbag device, such as an airbag device equipped for a front passenger in an automobile, comprises an instrument panel and a corresponding airbag located on backside of the instrument panel. In the event of a collision, the airbags can be inflated by gas. Because backside of the instrument panel has a weakening line, the instrument panel impacted by the inflated airbag can be cleaved at the weakening line as a starting point and along extending direction of the weakening line, so that the airbag will pop up.

### Summary

An object of the present invention is to provide a textile cover.

Another object of the present invention is to provide an instrument panel.

Another object of the present invention is to provide a manufacturing method.

Another object of the invention is to provide an airbag device.

A textile cover according to one aspect of the present invention is of a monolayer or multilayer structure, wherein the tensile strength of the textile cover in length and cross direction is less than or equal to 480N, and the tear strength of the textile cover in length and cross direction is less than or equal to 48N.

In the technical solution of the above embodiment, by adjusting the mechanical properties of the textile cover, to make the tensile strength of the textile cover in length and cross direction is less than or equal to 480N and the tear strength of the textile cover in length and cross direction is less than or equal to 48N, that is, 480N as a critical point of the tensile strength, and 48N as a critical point of tear strength, so that the textile cover can not only have a self-tearing property, but also have a good looking, touch feeling and durability.

In one or more embodiments of the textile cover, the textile cover is of the multilayer structure, and the textile cover comprises: a first layer, as the surface layer of the textile cover, and being anisotropic; and a second layer, adjacent to the first layer on its back, and being isotropic; and/or a third layer, adjacent to the second layer on its back, and being isotropic; and/or a fourth layer, adjacent to the third layer on its back, and being isotropic.

In one or more embodiments of the textile cover, the first layer is a fabric layer, and/or the second layer is a fleece layer, and/or the third layer is a spacer fabric layer or a foam layer, and/or the fourth layer is a scrim layer.

An instrument panel according to another aspect of the present invention comprises the textile cover described above and a base having a weakening line on its backside; wherein the textile cover covers at least part of surface of the base.

In the technical solution of the above embodiment, by using the textile cover described above, the interior panel can not only cleave in time when a collision occurs to pop up the airbag, but also have a good looking, touch feeling and durability in normal time; meanwhile it also reduces manufacturing cost of instrument panel.

In one or more embodiments of the instrument panel, slots that form the weakening line are formed by the holes in the thickness direction of the base.

In one or more embodiments of the instrument panel, the material of the base comprises acrylonitrile butadiene styrene copolymers, ABS, polycarbonate and ABS alloy, ABS-PC, talc filled polypropylene, glass fiber reinforced polypropylene, or natural fiber reinforcement polypropylene, NFPP.

An airbag device according to another aspect of the present invention comprises the instrument panel described above and an airbag, wherein backside of the instrument panel is corresponding to the airbag, and when the airbag is inflated by gas, the base of the instrument panel will be cleaved along the weakening line and the textile cover will be self-tearing.

In the technical solution of the above embodiment, the airbag device can not only cleave in time when a collision occurs to pop up the airbag, but also have a good looking, touch feeling and durability in normal time.

A manufacturing method for an instrument panel according to another aspect of the present invention comprises: the textile cover described above being employed; surface of a base being at least partially covered by the textile cover, and the base being combined with the textile cover, and a weakening line being processed on backside of the base.

In the technical solution of the above embodiment, by using the textile cover described above, the manufacturing method does not need to carry out a processing step of processing a groove on the textile cover to be corresponding to the weakening line, and does not need a corresponding processing equipment, which simplifies the processing process and reduces the cost.

In one or more embodiments of the manufacturing method, surface of a substrate being at least partially covered by the textile cover to form an intermediate product, and then the weakening line being processed on backside of the substrate of the intermediate product; or, the weakening line being processed on the backside of the substrate to form the base, and then the base being at least partially covered by the textile cover.

In one or more embodiments of the manufacturing method, a step that a weakening line being processed on the backside of the base comprises a milling or a laser weakening process.

### Brief Description of the Drawings

The above and other features, properties and advantages of the present invention will become more obvious through the following description in combination with the accompanying drawings and embodiments. It should be noted that the accompanying drawings are only examples, which are not drawn according to the conditions of equal scale, and should not be used as a limitation on the protection scope actually required by the present invention, in which:
Fig. 1 is a schematic diagram of an instrument panel according to an embodiment.
Fig. 2 is a schematic diagram of an instrument panel according to another embodiment.
Fig. 3 is a flow chart of a manufacturing method for an instrument panel according to an embodiment.
Fig. 4 is a flow chart of a manufacturing method for an instrument panel according to another embodiment.
Fig. 5 is a flow chart of a manufacturing method for an instrument panel according to another embodiment.

Part of the reference numerals:
100-Instrument panel
1-Textile cover
11-First layer
12-Second layer
13-Third layer
14-Fourth layer
2-Base
21-Weakening line
210-Slot
211-Hole.

### Detailed Description of Embodiments

A variety of different implementations or embodiments for implementing the subject technical proposal are disclosed below. In order to simplify the disclosure, specific examples of each element and arrangement are described below. Of course, these are only examples and do not limit the protection scope of the present invention.

In addition, the use of "one embodiment", "an embodiment", and/or "some embodiments" means a feature, structure or characteristic related to at least one embodiment of the present application. Therefore, it should be emphasized and noted that the "an embodiment" or "one embodiment" or "one or more embodiments" mentioned twice or more in different positions in this specification do not necessarily refer to the same embodiment. In addition, some features, structures or characteristics in one or more embodiments of the present application may be combined appropriately.

An instrument panel (IP), such as an instrument panel corresponding to an airbag, generally comprises a cover on the surface and a base on the backside carrying the instrument panel, and the base is corresponding to the airbag. At this time, the base is also called an instrument panel carrier.

In a comparative technical solution, in order to meet the requirement of timely pop-up of the airbag, not only a weakening line needs to be provided on the base, but also a weakening groove corresponding to position of the weakening line needs to be processed on the cover on the surface.

However, the inventors have found that this will make manufacturing process of the instrument panel complicated and require high equipment costs.

Based on the above finding, the inventor has invented a textile cover after in-depth research. The tensile strength of the textile cover in length and cross direction is less than or equal to 480N and the tear strength of the textile cover in length and cross direction is less than or equal to 48N, that is, 480N is used as a critical point of the tensile strength, and 48N is used as a critical point of tear strength, that is, the upper limit of the tensile strength and tear strength, so that the textile cover can not only have a self-tearing property, but also have a good looking, touch feeling and durability. It can be understood that the textile cover also needs to have a certain strength, that is, the tensile strength and the tear strength also have a lower limit, and the lower limit can be adjusted according to actual engineering requirements, for example, it needs to meet basic strength requirements for an instrument panel or other kinds of panels.

Although the applicable object of the textile cover disclosed in the embodiment of the application is an instrument panel of the front row of an automobile, it is not limited to this, as long as the textile cover disclosed in the embodiment of the application can be applied to achieve a self-tearing property, but also have a good looking, touch feeling and durability. For example, it can also be an instrument panel on side wall of an automobile corresponding to a side airbag, and other occasions that require an airbag.

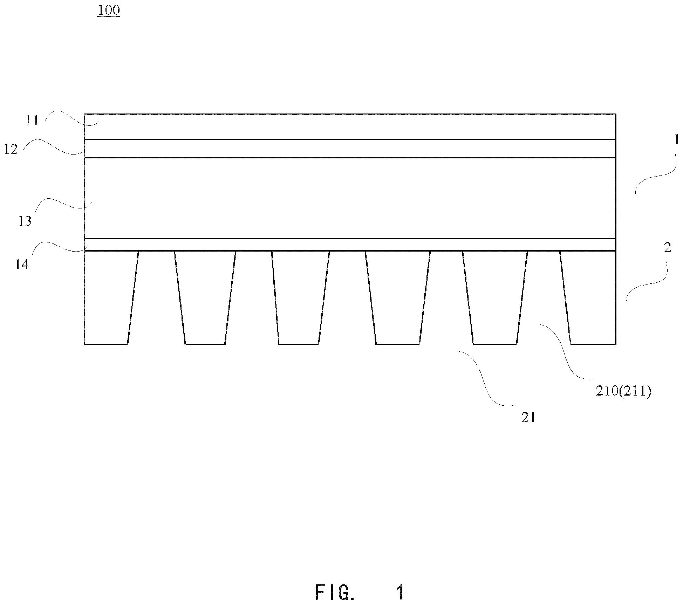

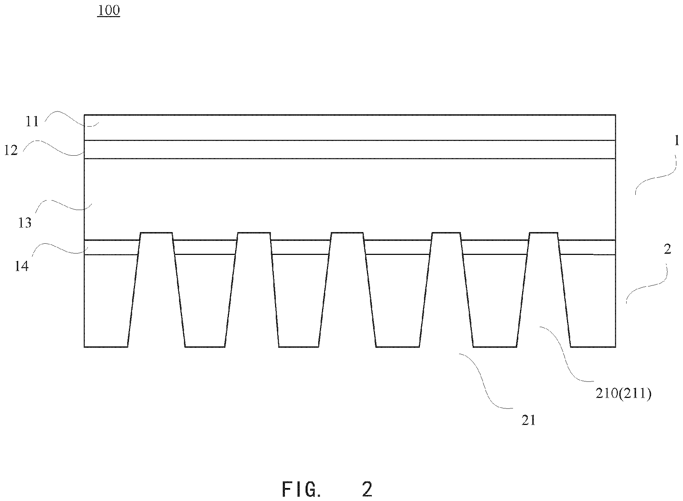

Referring to Fig. 1 or Fig. 2, in some embodiments, an instrument panel 100 comprises a textile cover 1 and a base 2. The textile cover 1 covers at least part of surface of the base 2, and the base 2 has a weakening line 21 on its backside.

For an airbag device, an airbag is set corresponding to backside of the instrument panel 100. When a collision happens, the airbag is inflated by gas, the base 2 of the instrument panel 100 will be cleaved along the weakening line 21 and the textile cover 1 will be self-tearing, so that the airbag will pop up, to protect a front row passenger.

Referring to Fig. 1 or Fig.2, in some embodiments, the textile is of a monolayer or multilayer structure. As shown in Fig. 1 or Fig. 2, the textile can comprise a first layer 11, a second layer 12, a third layer 13, and a fourth layer 14 which are stacked sequentially from surface to backside of the textile. The first layer serves as a surface layer of the textile cover 1, and the first layer is anisotropic, and the second layer 12 is adjacent to the first layer 11 on its back, and the second layer 12 is isotropic, and the third layer 13 is adjacent to the second layer 12 on its back, and the third layer 13 is isotropic, and the fourth layer 14 is adjacent to the third layer 13 on its back, and the fourth layer 14 is isotropic.

"Anisotropic" here means that the tensile strength along its surface is anisotropic, and the layer has different strength and stiffness when loaded in different loading directions. For example, the first layer 11 is a fabric layer using fibers all oriented in the same direction.

"Isotropic" here is that the tensile strength along its surface direction is isotropic, that is, it can also be called "quasi-isotropic", that is, regardless of the loading direction when the layer is loaded, its strength and stiffness will remain the same.

In some embodiments, preferably, it can comprise the anisotropic first layer 11 and at least one of the isotropic second layer 12, third layer 13, and fourth layer 14. That is, one, the first layer 11 and one of, two of, or all of the second layer 12, the third layer 13, and the fourth layer 14 are selected to be stacked and combined (such as the four-layer structure shown in Figure. 1 or Figure. 2), so that mechanical properties of the textile cover 1 can be adjusted easily. However, it can be understood that it also can comprise only the first layer 11, or comprise even more layers stacked on the backside of the fourth layer 14, which is not limited to those.

In some embodiments, preferably, the first layer 11 is a fabric layer, and/or the second layer 12 is a fleece layer, and/or the third layer 13 is a spacer fabric layer or a foam layer, and/or the fourth layer 14 is a scrim layer. For example, it can be a stacked combination of the first layer 11 and the third layer 13, the first layer 11 is an anisotropic polyethylene terephthalate (PET) fabric layer, and the third layer 13 is an isotropic polyurethane (PU) foam layer or a polypropylene (PP) foam layer. Such structure is simple, and it is easy to adjust the mechanical properties of the textile cover 1.

As described above, the inventor found after in-depth research that the textile 1 as shown in Fig. 1 an Fig. 2, for a single-layer or multi-layer structure of the textile cover 1, it only needs to have a tensile strength of the textile cover in length and cross direction is less than or equal to 480N, and a tear strength of the textile cover in length and cross direction is less than or equal to 48N, that is, 480N as a critical point of the tensile strength, and 48N as a critical point of tear strength, the textile cover can not only have a self-tearing property, but also have a good looking, touch feeling and durability.

Test method of " tensile strength " above, for example, can refer to the National Standard GB/T3923.1-2013 of the People's Republic of China " Textiles - Tensile properties of fabrics - Part 1: Determination of maximum force and elongation at maximum force using the strip method", but not limited thereto, can also refer to other recommended standards, or the standards of other countries or regions.

Similarly, test method of " tear strength " above, can refer to the National Standard GB/T 3917.1-2009 of the People's Republic of China " Textiles - Tear properties of fabrics - Part 1: Determination of tear force using ballistic pendulum method (Elmendorf)", but not limited thereto, can also refer to other recommended standards, or the standards of other countries or regions.

In some embodiments, continuing to refer to FIG. 1 or FIG. 2, a structure forming the weakening line 21 in the base 2 is that a plurality of slots 210 in the extending direction of the weakening line 21 form the weakening line 21. It can be understood that the number of slots 210 shown in FIG. 1 or FIG. 2 is only for illustration. Wall part of the slot 210 is formed by the holes 211 in the thickness direction of the base 2, and bottom part of the slot 210 is provided by the textile cover 1. The structure of the hole 211 can be a through hole as shown in the figure, or a blind hole. In some embodiments, the material of the base 2 comprises acrylonitrile-butadiene-styrene copolymer (ABS), polycarbonate and ABS alloy (ABS-PC), talc filled polypropylene, glass fiber reinforced polypropylene, or natural fiber reinforced polypropylene (NFPP), which can make the base 2 lightweight and reduce carbon emissions in the manufacturing process.

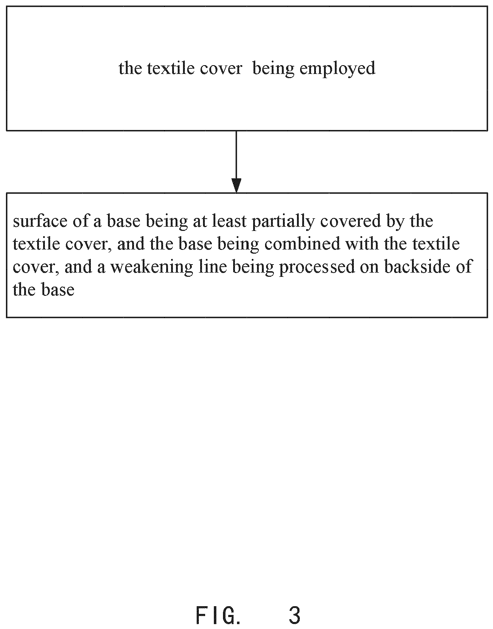

As described above, referring to Fig. 3, a manufacturing method for an instrument panel 100 comprises:
the textile cover 1 described in the above embodiments being employed;
surface of a base 2 being at least partially covered by the textile cover 1, and the base 2 being combined with the textile cover 1, and a weakening line 21 being processed on backside of the base 2.

In this way, the manufacturing method does not need to carry out a processing step of processing a groove on the cover corresponding to the weakening line, and does not need a corresponding processing equipment, which simplifies the manufacturing process and reduces the manufacturing cost.

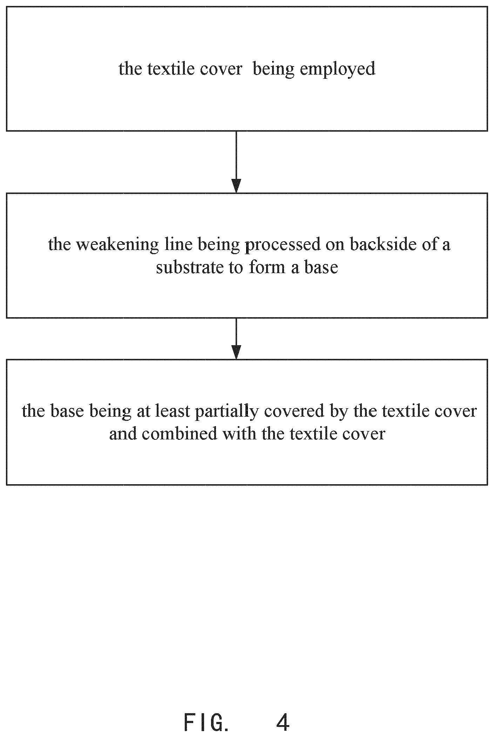

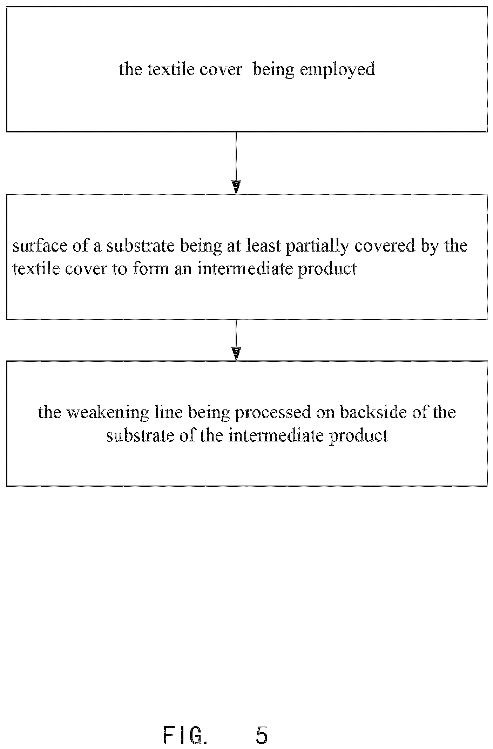

Referring to Fig. 1 and Fig. 4, in one embodiment, step of processing the weakened line 21 on the backside of the base 2 is: firstly, a substrate is processed the weakened line 21 on its backside to form the base 2, and then the base 2 is at least partially covered by the textile cover 1, step of processing the weakened line 21 can be laser drilling to obtain a through-hole-structure or a blind-hole-structure hole 211; that is, to process the weakened line 21 first, and then combine the textile cover 1 with the base 2. Referring to Fig. 2 and Fig. 5, in another embodiment, step of processing the weakened line 21 on the backside of the base 2 is: surface of the substrate is at least partially covered by the textile cover 1 to form an intermediate product, and then the substrate of the intermediate product is processed the weakened line 21 on its backside, that is, the textile cover 1 is first combined with the substrate, and then the weakened line 21 is processed. As shown in Fig. 2, step of processing the weakened line 21 can be that, making the wall part of the slot 210 extend to a certain thickness of the textile cover 1, and processing the slots 210 can be realized by a milling process. It can be understood that, besides the laser drilling and milling described above, the step of processing the weakening line 21 also includes other processes, which are not limited by the above description.

In some embodiments, step of surface of the base 2 being at least partially covered by the textile cover 1, combining the base 2 with the textile cover 1 can include, but not limited to, using premium wrapping, press covering, back injection, or NFPP one shot or two shots, to combine the textile cover 1 with the base 2 in a covering way.

Although the above embodiments of the present invention are disclosed as above, they are not used to limit the present invention. Any person skilled in the art can make possible changes and modifications without departing from the spirit and scope of the invention. Therefore, any modifications, equivalent changes and embellishments made to the above embodiments according to the technical essence of the present invention without departing from the technical proposal of the disclosure fall within the protection scope defined in the claims of the present invention.

## Claims

1. A textile cover (1), **characterized in that** the textile cover (1) is of a monolayer or multilayer structure, wherein the tensile strength of the textile cover (1) in length and cross direction is less than or equal to 480N, and the tear strength of the textile cover (1) in length and cross direction is less than or equal to 48N.

2. The textile cover (1) according to claim 1, **characterized in that** the textile cover (1) is of the multilayer structure, and the textile cover (1) comprises:
a first layer (11), as the surface layer of the textile cover (1), and being anisotropic; and
a second layer (12), adjacent to the first layer (11) on its back, and being isotropic; and/or
a third layer (13), adjacent to the second layer (12) on its back, and being isotropic; and/or
a fourth layer (14), adjacent to the third layer (13) on its back, and being isotropic.

3. The textile cover (1) according to claim 2, **characterized in that** the first layer (11) is a fabric layer, and/or the second layer (12) is a fleece layer, and/or the third layer (13) is a spacer fabric layer or a foam layer, and/or the fourth layer (14) is a scrim layer.

4. An instrument panel (100), **characterized in that** it comprises:
the textile cover (1) of any one of claims 1-3; and
a base (2), having a weakening line (21) on its backside;
wherein the textile cover (1) covers at least part of surface of the base (2).

5. The instrument panel (100) according to claim 4, **characterized in that** slots (210) that form the weakening line (21) are formed by the holes (211) in the thickness direction of the base (2).

6. The instrument panel (100) according to claim 4, **characterized in that**, the material of the base (2) comprises acrylonitrile butadiene styrene copolymers, ABS, polycarbonate and ABS alloy, ABS-PC, talc filled polypropylene, glass fiber reinforced polypropylene, or natural fiber reinforcement polypropylene, NFPP.

7. An airbag device, **characterized in that** it comprises:
the instrument panel (100) of any one of claims 4-6; and
an airbag;
wherein backside of the instrument panel (100) is corresponding to the airbag, and when the airbag is inflated by gas, the base (2) of the instrument panel (100) will be cleaved along the weakening line (21) and the textile cover (1) will be self-tearing.

8. A manufacturing method for an instrument panel (100), **characterized in that** it comprises:
the textile cover (1) of any one of claims 1-3 being employed;
surface of a base (2) being at least partially covered by the textile cover (1), and the base (2) being combined with the textile cover (1), and a weakening line (21) being processed on backside of the base (2).

9. The manufacturing method according to claim 8, **characterized in that**, surface of a substrate being at least partially covered by the textile cover (1) to form an intermediate product, and then the weakening line (21) being processed on backside of the substrate of the intermediate product; or, the weakening line (21) being processed on the backside of the substrate to form the base (2), and then the base (2) being at least partially covered by the textile cover (1).

10. The manufacturing method according to claim 8, **characterized in that** a step that a weakening line (21) being processed on the backside of the base (2) comprises a milling or a laser weakening process.
